(19) Europäisches Patentamt

European Patent Office

Office européen des brevets

(11) **EP 0 819 566 B1**

(12) **EUROPÄISCHE PATENTSCHRIFT**

(45) Veröffentlichungstag und Bekanntmachung des
Hinweises auf die Patenterteilung:
**22.01.2003 Patentblatt 2003/04**

(51) Int Cl.$^7$: **B60N 2/28**, B60R 21/00

(21) Anmeldenummer: **97109646.6**

(22) Anmeldetag: **13.06.1997**

(54) **Kraftfahrzeug mit zumindest einem Fahrzeugsitz**

Automotive vehicle with at least one vehicle seat

Véhicule automobile à au moins un siège de véhicule

(84) Benannte Vertragsstaaten:
**DE FR GB IT**

(30) Priorität: **17.07.1996 DE 19628763
30.05.1997 DE 19722734**

(43) Veröffentlichungstag der Anmeldung:
**21.01.1998 Patentblatt 1998/04**

(73) Patentinhaber: **Dr.Ing.h.c. F. Porsche
Aktiengesellschaft
70435 Stuttgart (DE)**

(72) Erfinder:
• **Bechtle, Rolf
74321 Bietigheim-Bissingen (DE)**
• **Häcker, Walter
71732 Tamm (DE)**

(56) Entgegenhaltungen:
**DE-A- 4 228 624          DE-U- 9 410 632
US-A- 5 468 014**

## Beschreibung

Die Erfindung bezieht sich auf ein Kraftfahrzeug mit zumindest einem Fahrzeugsitz an dem ein aufgesetzter Kindersitz befestigbar ist, mit den Merkmalen des Oberbegriffs des Hauptanspruchs 1, wie er beispielsweise bereits aus der DE 42 43 826 A1 bzw. der korrespondierenden US 5,468,014 bekannt ist.

Bei diesem aus der DE 42 43 826 A1 bekannten Kraftfahrzeug mit zumindest einen Fahrzeugsitz, an dem ein aufgesetzter Kindersitz befestigbar ist, ist eine Vorrichtung zur Entaktivierung eines vorgelagerten Airbags bei montiertem Kindersitz vorgesehen. Hierzu weist der Fahrzeugsitz beiderseits des Sitzkissens im Bereich zwischen den Rückenlehnen-Beschlägen und der Rückenlehne Gurtschlösser auf, in die korrespondierende Rasten des Kindersitzes einsteckbar sind. Die Gurtschlösser sind dabei mit einem auf das Befestigen des Kindersitzes reagierenden Sensor zur Entaktivierung des Airbags versehen. Bei dieser Anordnung wird also gleichzeitig mit dem Befestigen des Kindersitzes am Fahrzeugsitz der zugehörige Airbag entaktiviert.

Dieser Anordnung haftet der Nachteil an, daß eine Nachrüstbarkeit bei vorhandenen Serienfahrzeugen nur schwerlich mit vertretbarem Aufwand machbar ist, da sowohl am Kindersitz als auch am Fahrzeugsitz spezielle Anbauteile wie Rasten, Gurtschlösser oder dergleichen vorgesehen werden müssen. Aufgabe der Erfindung ist es, eine Vorrichtung zur Entaktivierung des vorgelagerten Airbags zu schaffen, die sich auch bei vorhandenen Serienfahrzeugen einfach und kostengünstig nachrüsten läßt.

Erfindungsgemäß wird diese Aufgabe durch die kennzeichnenden Merkmale des Hauptanspruchs gelöst, wobei die Vorrichtung durch eine am Kindersitz zusätzlich angebrachte Steckzunge und ein mit einer zentralen Auslöseeinheit in Wirkverbindung stehendes Steckschloß gebildet, wobei durch Einstecken der Steckzunge in das Steckschloß der Airbag entaktiviert und durch Lösen der Steckverbindung wieder aktiviert wird, und wobei das Steckschloß einen integrierten Geber aufweist, der über eine Verbindungsleitung an die zentrale Auslöseeinheit angeschlossen ist und wobei der Geber (gemäß den o.g. kennzeichnenden Merkmalen) redundant vorgesehen ist.

In vorteilhafter Weise ist durch diese Maßnahme die Sicherheit, daß bei montiertem Kindersitz der Airbag abgeschaltet ist, deutlich erhöht, so daß ein im Kindersitz sitzendes Kind besser vor einer Auslösung des Airbags geschützt ist.

In den Unteransprüchen sind weitere, die Erfindung in vorteilhafter Weise ausgestaltende Merkmale enthalten.

So wird vorgeschlagen, zur redundanten Anordnung den verwendeten Geber zweifach vorzusehen. Durch diese doppelte Anordnung des Gebers sinkt die Wahrscheinlichkeit, daß das Einstecken der Steckzunge in das Steckschloß durch einen defekten Geber nicht erkannt wird, deutlich ab.

Ferner wird vorgeschlagen, im Geber ein Schaltelement vorzusehen. Mit einem Schaltelement, beispielsweise einem Schalter oder einem Reed-Kontakt, kann das Einstecken der Steckzunge in das Steckschloß in bekannter Weise sehr zuverlässig erkannt werden.

Darüber hinaus wird vorgeschlagen, den Geber als Kette von zwei in Reihe geschalteten Widerständen auszuführen, wobei das Schaltelement einen der Widerstände überbrückt. Bei einer solchen Ausführung des Gebers sind neben dem nicht geschalteten Zustand des Schaltelementes (beide Widerstände aktiv) und dem geschalteten Zustand des Schaltelementes (nur ein Widerstand aktiv) auch ein Leitungsbruch (Widerstand unendlich) und ein Kurzschluß (Widerstand = 0) identifizierbar.

Zusätzlich wird vorgeschlagen, bei einer redundanten Anordnung der Geber die Widerstandsketten parallel zu schalten. Über die zuvor beschriebenen Zustände hinaus läßt sich nun auch zusätzlich auch identifizieren, ob einer der beiden Geber bzw. eines der in den beiden Gebern enthaltenen Schaltelemente defekt ist.

Schließlich wird vorgeschlagen, daß die zentrale Auslöseeinheit das Signal des Gebers auswertet und eine Auslösung des vorgelagerten Airbags nur dann zuläßt, wenn die Auswertung zweifelsfrei ergibt, daß die Steckzunge nicht in das Steckschloß eingesteckt ist. Diese Auswertung soll vorzugsweise durch Vergleich eines Gesamtwiderstandes des Gebers mit einem Sollwertbereich erfolgen. Hiermit erfolgt im Zeifelsfalle keine Auslösung eines dem Kindersitz vorgelagerten Airbags, so daß auch dann, wenn ein Kindersitz montiert ist, dies aber aufgrund eines Fehlers nicht erkannt wird, ein im Kindersitz sitzendes Kind vor einer Auslösung des Airbags geschützt ist.

Ein Ausführungsbeispiel der Erfindung ist in den Zeichnungen dargestellt und wird im folgenden näher beschrieben.

Es zeigen

Fig. 1     eine perspektivische Ansicht von schräg vorne auf einen auf das Sitzkissen eines Fahrzeugsitzes aufgesetzten, rückwärtsgerichteten Kindersitz,

Fig. 2     eine Seitenansicht des Fahrzeugsitzes mit dem aufgesetzten Kindersitz (Reboard-Sitz),

Fig. 3     eine Draufsicht auf die querverlaufende Traverse mit dem Steckschloß,

Fig. 4     einen Schnitt nach der Linie IV-IV der Fig. 3 und

Fig. 5     einen Schaltplan für einen im Steckschloß vorgesehenen Geber.

Das in den Figuren nicht näher dargestellte Kraftfahrzeug weist zumindest einen Fahrzeugsitz 1 mit einem darauf befestigbaren Kindersitz 2 auf. Die Befestigung des auf das Sitzteil 3 des Fahrzeugsitzes 1 aufgesetzten Kindersitzes 2 erfolgt mittels eines herkömmlichen Dreipunkt-Sicherheitsgurtes 4, der bei abgenommenem Kindersitz 2 zur Festlegung eines auf dem Fahrzeugsitz sitzenden Fahrzeuginsassen dient. Der Kindersitz 2 kann in Fahrtrichtung - nicht näher dargestellt - oder entgegen der Fahrtrichtung ausgerichtet sein.

Der Kindersitz 2 ist mit einem eigenen, nicht näher dargestellten Sicherheitsgurt (Hosenträgergurt oder Fangtisch) zum Festhalten eines Kindes versehen.

Damit bei einem Fahrzeugaufprall der sich öffnende vorgelagerten Airbag nicht gegen den Kindersitz 1 prallen und somit gegebenenfalls schwere Verletzungen beim Kind verursachen kann, ist eine Vorrichtung 6 zur Entaktivierung des nicht gezeigten Airbags bei montiertem Kindersitz 2 vorgesehen.

Die Vorrichtung 6 umfaßt eine am Kindersitz 2 zusätzlich angebrachte Steckzunge 7 und ein mit einer nicht näher dargestellten zentralen Auslöseeinheit für die Airbags in Wirkverbindung stehendes Steckschloß 8, wobei durch manuelles Einstecken der Steckzunge 7 in das Steckschloß 8 der Airbag entaktiviert und durch Lösen der Steckverbindung wieder aktiviert wird. Das Steckschloß 8 ist an einer in Fahrrichtung gesehen vor dem Fahrzeugsitz 1 angebrachten, querverlaufenden Traverse 9 angeordnet. Die in der Draufsicht gesehen etwa U-förmige Traverse 9 ist an ihren beiden längsverlaufenden Enden an den korrespondierenden Sitzschienen 10 lösbar befestigt. Dies erfolgt beispielsweise durch Schrauben.

In einem mittleren Bereich der Quererstreckung der einen kreisrunden Querschnitt aufweisenden Traverse 9 erstreckt sich das Steckschloß 8, wobei zwischen Traverse 9 und Steckschloß 8 ein kurzer Gurtbandabschnitt 11 verläuft. Der querverlaufende Abschnitt der Traverse 9 verläuft benachbart des Bodens des Kraftfahrzeuges.

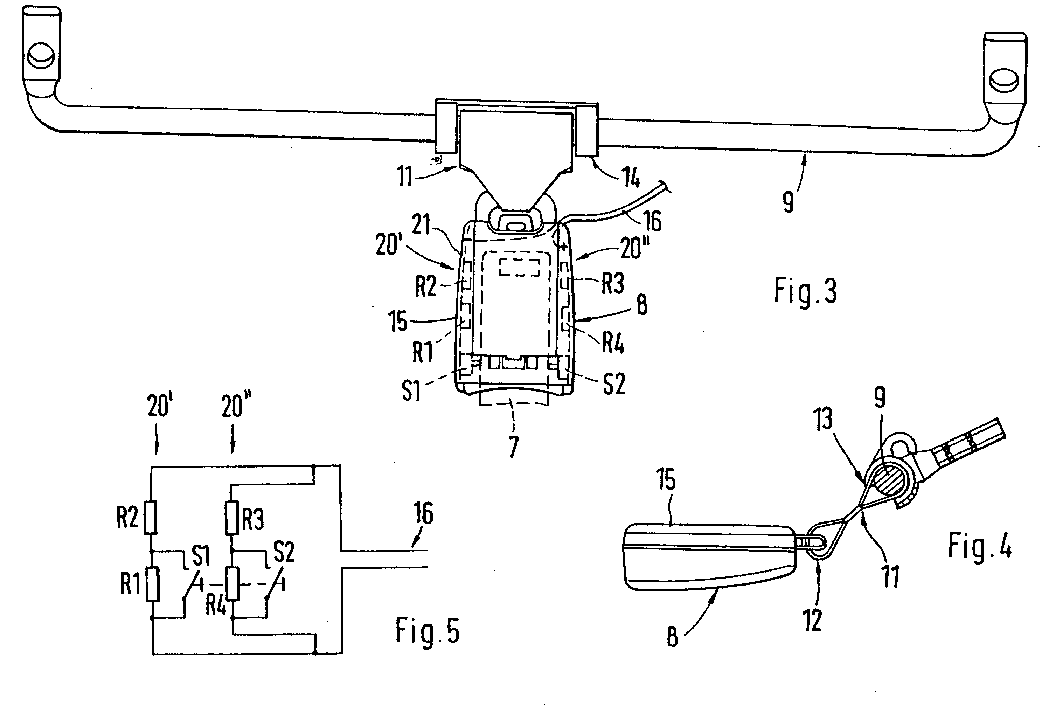

Im Ausführungsbeispiel umgibt ein erster ösenartiger Endbereich 12 des Gurtbandabschnitts 11 die querverlaufende Traverse 9, wogegen ein zweiter ösenartiger Endbereich 13 mit dem Steckschloß 8 verbunden ist (Fig. 4).

Der die Traverse 9 umgebende ösenartige Endbereich 12 ist mittels eines aufgeclipsten Stoppers 14 gegen seitliches Verschieben gesichert. Das Steckschloß 8 weist innerhalb des Gehäuses 15 einen Geber 20 auf, der über eine Verbindungsleitung 16 an die zentrale Auslöseeinheit angeschlossen ist. Die zentrale Auslöseeinheit wird bei Verwendung eines Kindersitzes 2 von der Fachwerkstätte umprogrammiert.

Der in Fig. 3 näher gezeigte Geber 20 ist innerhalb des Gehäuses 15 des Steckschlosses 8 angeordnet und redundant, hier zweifach, als erster Geber 20' und zweiter Geber 20", vorgesehen. Der erste Geber 20' besteht aus einer Platine 21, auf der als erstes Schaltelement ein erster Schalter S1 sowie zwei Widerstände R1, R2 angeordnet sind. Der erste Schalter S1 wird durch die Steckzunge 7 betätigt, wenn diese in das Steckschloß 8 eingesteckt ist. Der zweite Geber 20" ist analog aufgebaut und weist als zweites Schaltelement einen zweiten Schalter S2 sowie zwei weitere Widerstände R3, R4 auf.

Die zusätzliche Steckzunge 7 ist in einem mittleren Bereich der Quererstreckung des Kindersitzes 2 angeordnet, wobei zwischen Steckzunge 7 und Kindersitz 2 ein Gurtbandabschnitt 17 verläuft.

Die Steckzunge 7 und das Steckschloß 8 zur Entaktivierung des Airbags sind anders dimensioniert als die Steckzunge und das Gurtschloß des Sicherheitsgurtes 4 für den Fahrzeugsitz 1, um Fehlbedienungen auszuschließen.

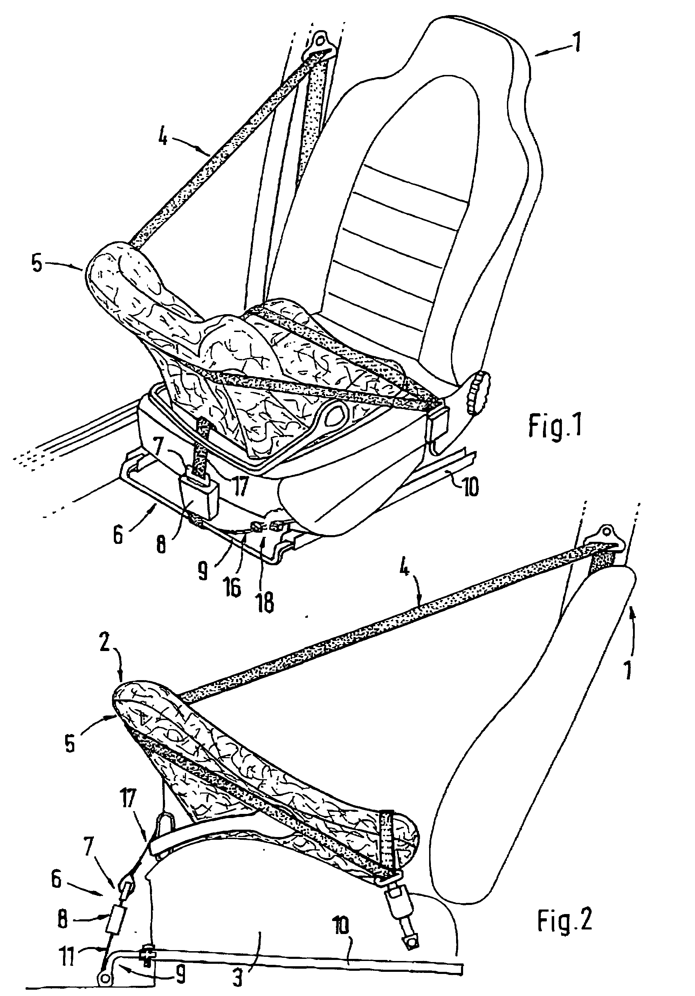

In den Fig. 1 und 2 ist die zusätzliche Steckzunge 7 des Kindersitzes 2 in das korrespondierende Steckschloß 8 eingesteckt und somit der Airbag entaktiviert.

In Fig. 1 ist die Steckverbindung 18 der zur zentralen Auslöseeinheit führenden Verbindungsleitung 16 in entkoppelter Stellung dargestellt; in Wirkstellung sind die beiden Steckerteile der Steckverbindung 18 miteinander verbunden.

Gemäß Fig. 1 ist ein Beifahrersitz mit einem aufgesetzten rückwärtsgerichteten Kindersitz dargestellt. Bei dieser Anordnung dient die Vorrichtung 6 zur Entaktivierung des Beifahrerairbags. Die Vorrichtung 6 könnte jedoch auch einem fondseitigen Fahrzeugsitz zugeordnet sein, bei dem der zugeordnete Airbag an der Rückseite der vorderen Fahrzeugsitze angeordnet ist. Zudem kann der Kindersitz parallel zum Fahrzeugsitz, also vorwärtsgerichtet am Fahrzeugsitz aufgesetzt sein.

Anhand des in Fig. 5 dargestellten Schaltplanes ist die Wirkung der Anordnung der Geber 20', 20" näher erläutert. Jeder der Geber 20', 20" besteht aus einer Kette von zwei Widerständen R1/2 und R3/4, wobei die beiden Geber 20', 20" parallel geschaltet und mit der Verbindungsleitung 16 verbunden sind. Die Widerstände R1, R4 sowie R2, R3 weisen jeweils denselben Widerstandswert auf, und zwar:

$$R1 = R4 = 4,02 \text{ kOhm}; \quad R2 = R3 = 511 \text{ Ohm}$$

Damit ergeben sich folgende Schaltzustände:

| Zustand | Gesamtwiderstand [Ohm] | Airbag- Auslösung |
|---|---|---|
| Steckzunge 7 nicht gesteckt | 2.266 | nein |
| Steckzunge 7 gesteckt | 256 | ja |
| Steckzunge 7 gesteckt, S1 oder S2 defekt | 459 | ja |
| Steckzunge 7 gesteckt, ein Geber 20' oder 20'' defekt | 511 | ja |
| Steckzunge 7 nicht gesteckt, ein Geber 20' oder 20'' defekt | 4.531 | nein |
| Verbindungsleitung 16 defekt | unendlich | nein |

Bei einer Auswertung des Gesamtwiderstandes des Gebers 20 durch die zentrale Auslöseeinheit ist zu berücksichtigen, daß bei einer Auslöseeinheit, die zur Verwendung eines Kindersitzes programmiert ist, die Nicht-Auslösung des beifahrerseitigen Airbags Priorität genießt. Solange nicht sichergestellt ist, daß kein Kindersitz montiert ist, wird die Auslösung des beifahrerseitigen Airbags unterdrückt.

Die Werte der Widerstände R1 bis R4 wurden im vorliegenden Beispiel in vorteilhafter Weise so gewählt, daß eine eindeutige Identifizierung einer nicht eingesteckten Steckzunge 7 möglich ist. Dies wurde erreicht, indem die Widerstandswerte der von den Schaltern S1, S2 überbrückten Widerstände R1, R4 deutlich größer gewählt wurden, als die Widerstandswerte der beiden anderen Widerstände R2, R3, die nicht überbrückt werden.

Die Auswertung des Gesamtwiderstandes des Gebers 20 durch die zentrale Auslöseeinheit erfolgt durch Zuordnung des Gesamtwiderstandes zu Widerstandsbereichen, wie sie in der nachfolgenden Tabelle gezeigt sind. Bei der Bemessung der Widerstandsbereiche für die Zustände "Steckzunge 7 gesteckt", "Steckzunge 7 gesteckt, Fehler" und "Steckzunge 7 nicht gesteckt" wurden sowohl die Bauteiltoleranzen der Widerstände R1 bis R4 wie auch die Auswertetoleranzen in der zentralen Auslöseeinheit berücksichtigt.

| Gesamtwiderstand [Ohm] | Ergebnis der Auswertung: Zustand |
|---|---|
| < 70 | Fehler |
| 70 .. 240 | nicht definiert |
| 240 .. 270 | Steckzunge 7 gesteckt |
| 270 .. 435 | nicht definiert |
| 435 .. 600 | Steckzunge 7 gesteckt, Fehler |
| 600 .. 2020 | nicht definiert |
| 2020 .. 2320 | Steckzunge 7 nicht gesteckt |
| 2320 .. 4300 | nicht definiert |
| > 4300 | Fehler |

Bei der vorliegenden Auslegung wird der Airbag ausgelöst, wenn der Gesamtwiderstandswert zwischen 2020 Ohm und 2320 Ohm liegt. In allen anderen Widerstandsbereichen wird von der zentralen Auslöseeinheit eine Fehlermeldung ausgegeben, wobei die Art des Fehlers (Schalter defekt, Widerstand defekt, Verbindungsleitung defekt etc.) mit ausgegeben werden kann. Ebenfalls eine Fehlermeldung erfolgt, wenn bei einer Auslöseeinheit, die zur Verwendung eines Kindersitzes nicht programmiert ist, einer der Zustände "Steckzunge 7 gesteckt", "Steckzunge 7 gesteckt, Fehler" oder "Steckzunge 7 nicht gesteckt" festgestellt wird. Es ist möglich, daß bei einer derart eindeutigen Erkennung des Zustandes "Steckzunge 7 gesteckt" oder "Steckzunge 7 gesteckt, Fehler" auch eine nicht entsprechend programmierte zentrale Auslöseeinheit die Auslösung des Airbags unterdrückt.

**Patentansprüche**

1.  Kraftfahrzeug mit zumindest einem Fahrzeugsitz, an dem ein aufgesetzter Kindersitz befestigbar ist, wobei eine Vorrichtung zur Entaktivierung eines vorgelagerten Airbags bei montiertem Kindersitz vorgesehen ist, die durch eine am Kindersitz (2) zusätzlich angebrachte Steckzunge (7) und ein mit einer zentralen Auslöseeinheit in Wirkverbindung stehendes Steckschloß (8) gebildet wird, wobei durch Einstecken der Steckzunge (7) in das Steckschloß (8) der vorgelagerten Airbag entaktiviert und durch Lösen der Steckverbindung wieder aktiviert wird und das Steckschloß (8) einen integrierten Geber (20) aufweist, **dadurch gekennzeichnet, daß** der Geber (20) redundant vorgesehen und über eine Verbindungsleitung (16) an die zentrale Auslöseeinheit angeschlossen ist, wobei der Geber (20) ein Schaltelement (S1, S2) aufweist und wobei der Geber (20) als Kette von zwei in Reihe geschalteten Widerständen (R1/R2, R3/R4) ausgeführt ist und das Schaltelement (S1, S2) einen der Widerstände überbrückt.

2. Kraftfahrzeug nach Anspruch 1, **dadurch gekennzeichnet, daß** der Geber (20) zweifach vorgesehen ist.

3. Kraftfahrzeug nach Anspruch 1, **dadurch gekennzeichnet, daß** die Ketten von Widerständen parallel geschaltet sind.

4. Kraftfahrzeug nach einem der vorstehenden Ansprüche, **dadurch gekennzeichnet, daß** die zentrale Auslöseeinheit das Signal des Gebers (20) auswertet und eine Auslösung des vorgelagerten Airbags nur dann zuläßt, wenn die Auswertung zweifelsfrei ergibt, daß die Steckzunge (7) nicht in das Steckschloß (8) eingesteckt ist.

5. Kraftfahrzeug nach Anspruch 6, **dadurch gekennzeichnet, daß** die Auswertung durch Vergleich eines Gesamtwiderstandes des Gebers (20) mit einem Sollwertbereich erfolgt.

**Claims**

1. A motor vehicle with at least one vehicle seat, on which a child's seat placed thereon can be fastened, wherein a device is provided for disabling an airbag positioned in front when the child's seat is mounted, the said device being formed by an insertion tongue (7) additionally attached to the child's seat (2) and an insertion lock (8) operatively connected to a central release unit, wherein the airbag positioned in front is disabled by the insertion of the insertion tongue (7) in the insertion lock (8) and is enabled again by the release of the insertion connexion, and the insertion lock (8) comprises an integrated transmitter (20), **characterized in that** the transmitter (20) is provided so as to be redundant and is attached to the central release unit by way of a connexion line (16), wherein the transmitter (20) comprises a switching member (**S1**, **S2**) and wherein the transmitter (20) is constructed in the form of a chain of resistors (**R1/R2**, **R3/R4**) connected in series and the switching member (**S1**, **S2**) bridges one of the resistors.

2. A motor vehicle according to Claim 1, **characterized in that** the transmitter (20) is provided double.

3. A motor vehicle according to Claim 1, **characterized in that** the chains of resistors are connected in parallel.

4. A motor vehicle according to one of the preceding Claims, **characterized in that** the central release unit evaluates the signal of the transmitter (20) and allows a release of the airbag positioned in front only when the evaluation ascertains without doubt that the insertion tongue (7) is not inserted in the insertion lock (8).

5. A motor vehicle according to Claim 6 [*sic*], **characterized in that** the evaluation takes place by comparison of an overall resistance of the transmitter (20) with a nominal-value range.

**Revendications**

1. Véhicule automobile comportant au moins un siège auquel peut être fixé un siège pour enfant placé dessus, dans lequel est prévu un dispositif pour désactiver un sac gonflable placé devant lorsque le siège pour enfant est monté et qui est constitué par une languette à enficher (7) placée en supplément sur le siège pour enfant (2), ainsi que d'un fermoir à enfichage (8) en liaison active avec une unité centrale de déclenchement, dans lequel par enfichage de la languette à enficher (7) dans le fermoir à enfichage (8), le sac gonflable situé devant est désactivé et est à nouveau activé par déverrouillage de la liaison à enfichage, et le fermoir à enfichage (8) comporte un transmetteur (20) intégré, **caractérisé en ce que** le transmetteur (20) est prévu redondant et est raccordé, par une ligne de liaison (16), à l'unité centrale de déclenchement, le transmetteur (20) comportant un élément de commutation (S1, S2) et le transmetteur (20) étant réalisé en tant que chaîne de deux résistances (R1/R2, R3/R4) montées en série, et l'élément de commutation (S1, S2) ponte l'une des résistances.

**2.** Véhicule automobile selon la revendication 1, **caractérisé en ce que** le transmetteur (20) est prévu deux fois.

**3.** Véhicule automobile selon la revendication 1, **caractérisé en ce que** les chaînes de résistances sont montées en parallèle.

**4.** Véhicule automobile selon l'une des revendications précédentes, **caractérisé en ce que** l'unité centrale de déclenchement exploite le signal du transmetteur (20) et n'autorise un déclenchement du sac gonflable situé devant que si l'interprétation indique sans aucun doute possible que la languette à enficher (7) n'est pas enfichée dans le fermoir à enfichage (8).

**5.** Véhicule automobile selon la revendication 6, **caractérisé en ce que** l'exploitation s'effectue par comparaison d'une résistance totale du transmetteur (20) à une plage de valeurs de consigne.

Fig.1

Fig.2

Fig. 3

Fig. 4

Fig. 5